# EUROPEAN PATENT SPECIFICATION

(11) **EP 4 289 275 B1**
(45) Date of publication and mention of the grant of the patent: **27.05.2026**
(21) Application number: 22177456.5
(22) Date of filing: 07.06.2022
(51) Int. Cl.: A01N 65/00, A01N 65/22, A01N 65/26, A01N 25/28, A01P 17/00

(54) **INSECT REPELLENT COMPOSITION**
INSEKTENABWEISENDE ZUSAMMENSETZUNG
COMPOSITION INSECTIFUGE

(43) Date of publication of application: 13.12.2023
(73) Proprietor: Universität für Bodenkultur Wien, 1180 Wien (AT)
(72) Inventor: EHMOSER, Eva-Kathrin, 1180 Wien (AT); SPERL, Ingeborg, 1180 Wien (AT)
(74) Representative: Loidl, Manuela Bettina

(56) References cited:
- WO-A1-2017/182350
- US-A- 5 221 535
- OGILVIE-BATTERSBY JAMES D ET AL: "Microencapsulation and controlled release of insect repellent geraniol in gelatin/gum arabic microcapsules", COLLOIDS AND SURFACES A : PHYSIOCHEMICAL AND ENGINEERINGS ASPECTS, ELSEVIER, AMSTERDAM, NL, vol. 640, 2 February 2022 (2022-02-02), XP086970620, ISSN: 0927-7757, [retrieved on 20220202], DOI: 10.1016/J.COLSURFA.2022.128494
- AMBERKAR TEJASHREE ET AL: "Synthesis and Study of Microcapsules with Beeswax Core and Phenol-Formaldehyde Shell Using the Taguchi Method", THE 2ND INTERNATIONAL ONLINE CONFERENCE ON POLYMER SCIENCE-POLYMERS AND NANOTECHNOLOGY FOR INDUSTRY 4.0, 1 January 2021 (2021-01-01), Basel Switzerland, pages 1 - 5, XP055971016, DOI: 10.3390/IOCPS2021-11207
- DA SILVA M�RCIO ROBERT MATTOS ET AL: "An approach to natural insect repellent formulations: from basic research to technological development", ACTA TROPICA, ELSEVIER, AMSTERDAM, NL, vol. 212, 28 February 2020 (2020-02-28), XP086399331, ISSN: 0001-706X, [retrieved on 20200228], DOI: 10.1016/J.ACTATROPICA.2020.105419
- MELANIE TAVARES ET AL: "Trends in insect repellent formulations: A review", INTERNATIONAL JOURNAL OF PHARMACEUTICS, vol. 539, no. 1-2, 3 February 2018 (2018-02-03), NL, pages 190 - 209, XP055619665, ISSN: 0378-5173, DOI: 10.1016/j.ijpharm.2018.01.046

## Description

### FIELD OF THE INVENTION

The present invention relates to the field of insect or arachnid repellents for the protection of living beings. The present invention provides an insect/arachnid repellent composition also providing a mechanical barrier against biting insects and arachnids, such as tics, and a manufacturing process therefor.

### BACKGROUND OF THE INVENTION

Insects, particularly ticks, mosquitoes, and flies, especially bloodsucking flies, are a perennial problem and are often regarded as pests to both animals and humans. Insects can carry many different diseases and their bites can cause itching and/or discomfort in both animals and humans and can also result in an infection of the bitten area. In addition, many humans and animals have a high sensitivity to the bites or infestations of various insects and may suffer serious allergic reactions and even death due to insects. Moreover, with regard to livestock and pets, insects can create serious economic issues.

Consequently, compositions which repel or kill insects are commonly used to keep insects away from animals, and humans. However, many presently commercially available insecticides, including those available for human and/or household use, include harsh chemicals that can be present in concentrations that are toxic to humans and animals. In addition, many common insecticidal compositions are designed specifically for a particular type of insect. Repellents often selectively refer to insects/spider species, such as certain mosquito species or ticks, but are relatively ineffective against other insect species, such as the horsefly. Finally, development of resistance against classic repellents or toxins are increasingly reported.

In particular, various undesirable side effects have been observed after the use of commercially available insecticides. These side effects have included immediate or delayed neurotoxic reaction, suffocation, headaches, and/or nausea. Further, the harsh chemicals typically contained in currently available insecticides have been known to cause significant skin irritation when they are directly applied to a living surface, such as the skin of animals or humans. In addition, most classic insect repellents contain synthetic insecticides or essential oils. Synthetic repellents or contact insecticides, upon direct application to the skin, generally have the disadvantage of a certain toxicity, or in some cases a strong allergenic effect. The effectiveness of classic repelling agents lasts only for a time range of hours. Some known insect repellents are also harmful to the environment. Especially, they render toxic for aquatic organisms (newt larvae development) or act as contact poisons, but do not significantly prevent the stinging process, which is a major disadvantage in the context of disease transmission.

At present, a wide variety of products are available on the market, whose ingredients have been known for a long time (e.g. N,N-diethyl-meta-toluamide (DEET), or para-menthane-3,8-diol (PMD) and the pyrethrum derivatives, i.e. chrysanthemum extracts, which are effective against mosquitoes, or icaridine/pecaridine against ticks. **In** the meantime, essential oils have also been increasingly used to support insect/tick repellent.

**In** any case, known products have a limited effectiveness of about 8 hours. None of the commercially available products is effective for more than one day on a living organism, let alone economically viable on livestock. Heat-evaporable insect repellents are available on the market, but show spatially limited efficacy that is only effective 'near the socket', is too selective and too expensive for livestock application, and also lacks long-lasting efficacy. The prolongation of the adhesion of conventional insect repellents has been improved by formulation in creams, but so far, no consideration has been given to achieving further, namely mechanical, protection through the formulation, or the efficacy *per se* could not be increased, let alone the handling or mitigation of toxic (side) effects.

Ogilvie-Battersby J. et al. report encapsulation of geraniol in gelatin/gum arabic, wherein coacervation was used to obtain microcapsules. Thereby, release of geraniol was prolonged and application of said microcapsules as long-lasting insect repellents was tested (Colloids and Surfaces A, 2022, vol. 640).

US5221535 describes a microsuspension system containing insect repellents such as DEET, with a layer of phospholipids. The core of the liposphere is a solid insect repellent, or an insect repellent dispersed in a solid vehicle, such as a wax.

A microcapsule containing a core with an active substance and a coating layer system comprising two layers of shellac and a pH modulating substance is disclosed in

Amberkar Tejashree et al. report microcapsules with a beeswax core and a shell of phenol-formaldehyde and its processing. (The 2nd International Online Conference on Polymer Science-polymers and Nanotechnology for Industry 4.0, 2021, pp 1-5).

Da Silva Marcio R. M. et al. give an overview and discloses natural insect repellent formulations such as essential oils from geranium, eucalyptus or lavender (Acta Tropica, 2020, vol. 212).

Tavares M. et al. provide an overview on insect repellent formulations (International Journal of Pharmaceutics, 2018, vol. 539, no. 1-2, pp. 190-209).

In equestrian sports or horse keeping in general, an effective and non-toxic insect repellent is highly demanded, specifically when considering the health and psychological strain on animals and humans. An affordable and effectively lasting repellent, taking into account the accompanying factors such as costs, compatibility, specifically environmental compatibility, and effectiveness, does not exist.

Accordingly, there is an urgent need for improved, long-lasting compositions for repelling insects that provide safer and more effective alternatives to the present chemical-based insecticides.

### SUMMARY OF THE INVENTION

It is therefore the objective of the present invention to provide a safe, long-lasting insect and/or arachnid repellent composition, which is well tolerated by humans and animals.

The objective is solved by the subject of the claims and as further described herein.

Herein provided is a mechanical and thus universally effective insect barrier.

According to the invention, a composition is provided, comprising
i) a microparticle having
   - an outer shell, comprising shellac or a tree resin, and
   - an inner matrix, comprising beeswax and at least one insect and/or arachnid repellent; and
ii) an adhesion promoting agent, selected from the group consisting of propolis, cetyl alcohol, cocoa butter, lysolecithin, and hydrated magnesium silicate (talcum).

The inventive composition specifically is aligned to the biting tools and proboscis of insects, thereby the outer shell comprising shellac or tree resin and the beeswax of the inner matrix (core) significantly prevent insect biting tools and proboscis from penetrating the protective layer of the inventive composition.

The surprising effect of the composition is specifically based on an effective encapsulation of insect/arachnid repellents.

The adhesion promoting agent specifically adheres to animal hairs and can act as a skin protector, in addition to the olfactory/chemical efficacy of the insect/arachnid repellent comprised in the core of the microparticle.

The inventive composition therefore has mechanical strength and is water-resistant and, upon topical administration to the subject, can further provide a self-closing and thus long-term stable barrier against a variety of stinging/biting insects and or arachnids due to the body temperature which can lead to melting of the composition.

The presence of beeswax, and optionally of propolis, in addition, can also have a supportive effect on treating and healing insect bites and other wounds caused by insects.

The composition described herein has a long-lasting effect, specifically over two or more days against biting and stinging insects and arachnids (ticks).

The repelling ingredients are stabilized in the core of the microparticle, are thus protected against water-based rinsing off, and consequently are released over long-term into the surrounding air with the wax material forming a mechanical, skin-friendly barrier on the treated subject.

According to a specific embodiment, the adhesion promoting agent is propolis.

In a further specific embodiment, the tree resin is pine resin or Arabic gum.

In an embodiment, the repellent is a natural and/or synthetic repellent, specifically it is a lipophilic repellent.

Specifically, the synthetic repellent is selected from the group consisting of hydroxyethyl isobutyl piperidine carboxylate, permethrin, ethyl butylacetyl aminopropionate, diethyltoluamide (DEET), p-cymol, alpha-isomethyl ionone, and benzyl benzoate or any combinations thereof.

Specifically, the natural repellent is selected from the group consisting of pyrethrum, pyrethrum derivatives selected from the group consisting of prallethrin, allethrin, and chrysanthemum extract, borneol, oil of lemon eucalyptus, thyme oil, tea tree oil, neem oil, Swiss stone pine oil, cumin oil, marjoram oil, sage oil, linalool, geraniol, cinnamyl alcohol, hydroxycitronellal, citronellol, coumarin, limonene, and eugenol, or any combinations thereof.

In a specific embodiment, the outer shell of the microparticle described herein comprises shellac, and propolis.

In a further embodiment, the composition described herein further contains an alcohol, specifically ethanol, and/or glycerol.

In a further embodiment, the inner matrix of the microparticle further comprises an odorous substance, and/or sunscreen agents, specifically selected from titanium dioxide, and zinc oxide.

Specifically, the microparticle described herein has a mean diameter in the range of 20 to 500 µm.

Further provided herein is a topical composition comprising the inventive composition, which is formulated as a balm, a cream, a powder, a lotion, a solution, an emulsion, a gel, an ointment, a paste, a pen, a spray, or an aerosol.

Specifically, the topical composition described herein contains microparticles comprising beeswax in the range of 5 to 20%, shellac in the range of 1 to 10%, propolis in the range of 1 to 10%, insect repellents in the range of 1 to 10%, and glycerin and/or oil in the range of 10 to 40%.

Further provided herein is a method for producing a microparticle having an outer shell, comprising shellac or a tree resin, and an inner matrix, comprising beeswax and at least one insect and/or arachnid repellent; comprising the sequential steps of
i. mixing and stirring
   a) melted beeswax,
   b) one or more insect and/or arachnid repellents,
   c) shellac or a tree resin solubilized in alcohol, and
ii. performing a sonification step at a temperature in the range of 40 to 50 °C, thereby building the microparticles.

Specifically, an adhesion promoting agent is added in i.

In a further embodiment of the method described herein, a carrier material, specifically glycerin or a vegetable oil is added to the microparticles, and optionally a second sonification step is performed at a temperature in the range of 40 to 50 °C.

Also provided herein is the use of the inventive composition, or the inventive topical composition as insect and/or arachnid repellent.

Alternatively, herein provided is the inventive composition, or the inventive topical composition for use in the treatment of a human or non-human animal, wherein the non-human animal is selected from domestic pets, including canine animals and feline animals, livestock including equine animals, such as horses, bovine animals, ovine animals, such as porcine, or sheep; goats, apes, etc.

Further provided herein is a composition for use in protecting an animal from insects or arachnid bite injuries or puncture wounds, comprising the step of topical administration of the composition or the topical composition described herein to said animal.

The use of the inventive composition as an insect/arachnid defence is particularly effective for hairy animals or hairy regions of said animals, specifically for horses. Dogs and humans can also be protected from insects with a respective composition, as the wax film developed upon topical administration to the skin is not perceived as annoying.

### FIGURES

Figure 1: A large shellac particle can be seen in the light microscope image on the left, which is not visible in the fluorescence excitation (right), but only a free accumulation of wax, marked in the transmission with an arrow. This result confirms that the shellac coating effectively encloses the wax particles (free of defects).
Figure 2: Microparticles were incubated in a strong, organic solvent (dimethyl sulfoxide DMSO). Subsequently, the penetration of the fluorescent dye into the wax core of the particles was observed. Scalebar of the images corresponds to 20µm, measured in phosphate buffer.
Figure 3: Layer formation properties of the microparticles visible in SEM (Scanning Electron Microscopy), air-dried and after gold sputtering.
Figure 4: Front formation of molten wax from the upper right towards the lower left, where areas of non-fused material are still visible.
Figure 5: After *in situ* heating with warm air to approx. 40°C (infrared measurement on the cover slip), visible film formation occurred directly on the (glass - slide) surface with simultaneous preservation of oil/wax/shellac particles (relevant for depot effect).
Figure 6: Image sequence: *in situ* crack healing. The layer on the slide surface was "injured" with a needle and the 'healing' was recorded by increasing the temperature from a temperature of approx. 30°C onwards. (Timelapses from top to bottom, approx. 2min).
Figure 7: After application and evaporation of the ethanol, the layer formation and association of particles (wax/shellac aggregates) is visible in the light microscope. The associated aggregates cause the depot/self-healing effect, as they serve as a reservoir of the repellent substances and at the same time as a wax supply. Comprised essential oils or repellents are successively released from them into the ambient air.

### DETAILED DESCRIPTION

The terms "comprise", "contain", "have" and "include" as used herein can be used synonymously and shall be understood as an open definition, allowing further members or parts or elements. "Consisting" is considered as a closest definition without further elements of the consisting definition feature. Thus "comprising" is broader and contains the "consisting" definition.

The term "about" as used herein refers to the same value or a value differing by +/-5 % of the given value.

As used herein and in the claims, the singular form, for example "a", "an" and "the" includes the plural, unless the context clearly dictates otherwise.

The terms "subject", or "animal" can be used interchangeably.

The inventive composition comprises microparticles. Said microparticles are composed an inner matrix or core, which is encapsulated by an outer shell or membrane.

The outer shell or capsule contains shellac or a tree resin.

**Shellac** is a natural bioadhesive polymer and is an excretory product of a species of louse (*Kerria Lacca*) that produces the so-called leaf varnish on special trees in certain areas, which is scraped off directly from the tree and purified in ethanol. Shellac has a melting point of about 75 °C. Shellac is soluble in alkaline solutions of ammonia, sodium borate, sodium carbonate, and sodium hydroxide, and also in various organic solvents. When dissolved in alcohol (e.g. ethanol) for application, shellac yields a coating of good durability and hardness. Upon mild hydrolysis shellac gives a complex mix of aliphatic and alicyclic hydroxy acids and their polymers that varies in exact composition depending upon the source of the shellac and the season of collection. The major component of the aliphatic component is aleuritic acid, whereas the main alicyclic component is shellolic acid. Shellac is UV-resistant.

According to the present invention, shellac is used to form stable aggregates in an ethanolic solution with beeswax that is liquefied by heating, further undergoing a homogenisation process (ultrasound), specifically in the presence of propolis and oils. Shellac can form a colloidal-stabilising gel-like shell on the surface of the beeswax aggregates. After evaporation of the ethanol and in the presence of water, the shellac irreversibly crystallises, which in tum stabilises the wax layer at the air interface.

**"Tree resin",** specifically soft tree resin, is the hydrocarbon secretion of many plants, generally of coniferous trees such as, but not limited to cedars, acacia trees, Douglas-firs, cypresses, pines, and hemlocks. Most plant resins are composed of terpenes. Specific components are alpha-pinene, beta-pinene, delta-3 carene, and sabinene, the monocyclic terpenes limonene and terpinolene, and smaller amounts of the tricyclic sesquiterpenes, longifolene, caryophyllene, and delta-cadinene. Some resins also contain a high proportion of resin acids.

**"Arabic gum",** also known as *gum sudani,* acacia gum, gum Arabic, gum acacia, acacia, Senegal gum, Indian gum, is a natural gum originally consisting of the hardened sap of two species of the *Acacia sensu lato* tree, *Senegalia senegal* and *Vachellia seyal.* The term "gum arabic" does not legally indicate a particular botanical source. The gum is harvested commercially from wild trees. Arabic gum is a complex mixture of glycoproteins and polysaccharides, predominantly polymers of arabinose and galactose. It is soluble in water.

**"Pine resin"** is made from the oleo-resin (turpentine) harvested from various kinds of pine tree which is then boiled to remove the essential oils.

**"Beeswax",** *cera flava,* is soluble in ethanol, and insoluble in water. Beeswax is oxygen permeable. The main constituents are long-chain hydrocarbons (myricin, or mainly palmitic acid myricyl esters) (proportion approx. 65% by weight), free cerotic acid, melissic acid and similar acids (12%), saturated hydrocarbons (approx. 14%), alcohols (approx. 1%) and other, partly as yet unknown substances, such as aromatic substances specific to bee species (6%).

One important property of beeswax is its microcidal property in combination with skin compatibility, which cannot be achieved with other polymers such as paraffins, or silicones. Thereby, upon administration to the skin, the skin is protected and not 'sealed' while at the same time the formulation is durable against microbial/fungal infestation.

Beeswax can form water-stable layers and when combined with shellac, is also a natural product from scale insects, allowing a formulation that is colloidal in character and therefore stable, easy to apply and forming a long-lasting and self-repairing film especially on animal hair.

Beeswax is also highly advantageous as it mixes with repelling substances, added as oil format, liquids or in particle format.

**"Insect/arachnid repellents"** as used herein refer to any substance that deters insects or arachnids from approaching or settling. Said repellents can be of natural or synthetic origin.

Common synthetic insect repellents can be, but are not limited to butopyronoxyl (Indalone^{®}), p-cymol, DEET (N,N-diethyl-m-toluamide), dimethyl carbate, dimethyl phthalate, ethyl butylacetylaminopropionate (IR3535 or 3-[N-Butyl-N-acetyl]-aminopropionic acid, ethyl ester), icaridin, also known as picaridin, ethyl anthranilate, anthranilate-based insect repellents, metofluthrin, permethrin, SS220, tricyclodecenyl allyl ether, hydroxyethyl isobutyl piperidine carboxylate, alpha-isomethyl ionone, and benzyl benzoate.

Common natural insect repellents can be, but are not limited to pyrethrum, pyrethrum derivatives such as prallethrin and allethrin, chrysanthemum extract, thyme oil, tea tree oil, neem oil, Swiss stone pine oil, cumin oil, black cumin oil, marjoram oil, sage oil, linalool, geraniol, cinnamyl alcohol, hydroxycitronellal, citronella oil, citronellol, coumarin, limonene, eugenol, birch tree bark, bog myrtle (Myrica Gale), nepetalactone, lemon eucalyptus oil (p-menthane-3,8-diol, PMD), lemongrass oil, cedarwood oil, cinnamon oil, clove oil, cornmint oil, garlic oil, geranium oil, peppermint oil, rosemary oil, spearmint oil, borneol, and tobacco.

Sage oil from the sage plant (*Salvia officinalis*) is a plant oil with a complex composition obtained by steam extraction. Common to eucalyptus is the substance cineol, whose insect repellent effect has been described, but sage does not have as strong an irritant effect as eucalyptus oil.

Further natural insect/arachnid repellents can be alpha-terpinene, *Andrographis paniculata* extracts, basil^{,} sweet basil (*Ocimum basilicum*), breadfruit, *Callicarpa americana* (beautyberry) extracts, camphor, carvacrol, castor oil, cedar oil, celery extract, clove oil, fennel oil (*Foeniculum vulgare*)*,* hinokitiol, lavender, marigolds, menthol, nootkatone, oleic acid, pennyroyal, peppermint, rosemary, yellow nightshade extract.

The composition containing the microparticles and the adhesion promoting agent is specifically able to mechanically resist the stinging/biting tools of insects. Even if the film would be imperfectly formed, admixed repellents are released and become effective.

The composition remains effective for a period of 1 to 21 days, specifically 1 to 14 days, specifically 2 to 8 days. Specifically, the composition is effective for more than 2, 3, 4, 5, 6, 7, 8, 9, 10 11, 12, 13, 14, 15, 16, 17, 18, 19, 20, or 21 days, especially when essential oils are comprised. The long-lasting effect of the composition may be attributed to a self-repairing effect, as the body temperature of the subjects to be protected leads to the continuous remelting of the wax and thus a potent defence barrier is created repeatedly from the reservoir in the coat and/or on the skin, specifically stably integrated due to the presence of the adhesion promoting agents, such as propolis. The inventive composition thus remains on the skin for several days, even up to weeks.

Exemplarily, the skin temperature in horses meets the melting point of the composition, but not in the coat area (hair). This is how the depot effect is achieved in horses and other animals with fur, as the microparticles in the coat reach the skin over time (self-healing effect).

Especially in the area of the ears and eyes, where chemical repellents cannot be used without further ado (due to the proximity to the mucous membranes or irritating or allergy-triggering effects), the microparticles in a liquid formulation, such as a lotion. The adhesion promoting agents propolis, cetyl alcohol, cocoa butter, lysolecithin and hydrated magnesium stearate are non-toxic materials and also can serve as emulsifiers or stabilisers.

In addition to the mechanical protective function, the microparticles comprise active insect/arachnid repellent substances, which may also act as effective olfactory repellents against ticks and insects. According to an aspect of the invention, the volatility of synthetic and natural repellents is reduced by the inventive composition and, in addition, the stability against the effects of water is increased in a chemical and physical way. This increases the effectiveness by the mechanical barrier effect, but also prolongs the chemical effect of the agents in the microparticles by protecting them from the effects of water/oxidation.

The composition can be adapted to the locally present insect population by selecting the respective insect/arachnid repellent. As an example, the addition of marjoram, thyme and sage, show profound repellent properties with regard to the biting fly *Stomoxys calcitrans.*

According to the present invention, the composition is used as insect and/or arachnid repellent. Sucking insects include mosquitoes (e.g. Aedes, Culex, and Anopheles species), butterflies (Phletotomen), midges (Culicoides species), black flies (Simulium species), biting flies (e.g. *Stomoxys calcitrans*), tsetse flies (Glossina species), horseflies (Tabanus, Haematopota, and Chrysops species), houseflies (e.g. *Musca domestica* and *Fannia canicularis*), flesh flies (e.g. *Sarcophaga carnaria*), myiasis-producing flies (e.g. *Lucilia couprina, Chrysomyia chloropyga, Hypoderma bovis, Hypoderma lineatum Dermatobia hominis, Oestrus ovis, Gasterophilus intestinalis, Cochliomyia hominovorax*), bugs (e.g. *Cimex lectularius, Rhodnius prolixus, Triatoma infestans*), lice (e.g. *Pediculus humanus, Haematipinus suis, Damalina ovis*), louse flies (e.g. *Melaphagus orinus*), fleas (e.g. *Pulex irritans, Cthenocephalides canis, Xenopsylla cheopsis*), and chiggers (e.g. *Dermatophilus penetrans*).

Biting insects include cockroaches (e.g. *Blattela germanica, Periplaneta americana, Blatta orientalis, Supella supellectilium*), beetles (e.g. *Sitophilus granarius, Tenebrio molitor, Dermestes lardarius, Stegobium paniceum, Anobium puntactum, Hylotrupes bajulus*), termites (e.g. *Reticulitermes lucifugus*), and ants (e.g. *Lasius niger*).

Mites include ticks (e.g. *Ornithodorus moubata, Ixodes ricinus, Boophilus microplus, Amblyomma hebreum*) and mites in the narrower sense (e.g. *Sarcoptes scabiei, Dermanyssus gallinae*).

The inventive composition further comprises one or more adhesion promoting agents, specifically propolis, agar-agar, cetyl alcohol, cocoa butter, lysolecithin, and hydrated magnesium silicate (talcum), magnesium stearate, or any combination thereof. The adhesion promoting agents can be freely present in the composition, but may also attach to the outer shell.

As used herein, **"propolis"** or "bee glue" is a complex mixture and may vary from hive to hive, from district to district, and from season to season. Normally, it is dark brown in color, but it can be found in green, red, black, and white hues, depending on the sources of resin found in the particular hive area. Main constituents are water-insoluble flavonoids, phenolic acids and a number of antioxidant substances. Propolis can act as bonding agent, emulsifier, has bactericidal properties, and is soluble in ethanol, and ethanol/water mixtures.

Northern temperate propolis has approximately 50 constituents, primarily resins and vegetable balsams (50%), waxes (30%), essential oils (10%), and pollen (5%). Propolis also contains persistent lipophilic acaricides, a natural pesticide that deters mite infestations. Overall, flavonoids, phenolic acids, and phenolic aldehydes are common constituents, while coumarins, stilbenes, and lignans are less common. Propolis can bond beeswax to a whole range of materials (wood, stone, etc.). In this context it can be used because of its adhesion between wax and skin/hair. Propolis has also skin-healing effect.

The microparticles containing beeswax and repellents, coated by shellac and combined with adhesion promoting agents allow formation of colloidally stable aggregates, which are able to encapsulate hydrophobic repellents, which are slowly released upon topical administration.

**Cetyl alcohol,** also known as hexadecan-1-ol and palmityl alcohol, is a C-16 fatty alcohol with the formula CH₃(CH₂)₁₅OH. At room temperature, cetyl alcohol takes the form of a waxy white solid or flakes.

**Cocoa butter,** also called theobroma oil, is a pale-yellow, edible fat extracted from the cocoa bean. Its melting point is between 34 and 38°C.

**Lysolecithins,** also called Lysophosphatidylcholines (LPC, lysoPC), are a class of chemical compounds which are derived from phosphatidylcholines. Lysolecithines are of the following structure, R being a variable fatty acid chain:

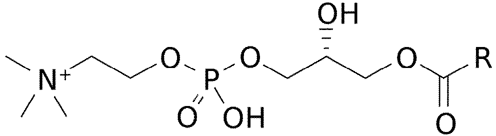

**Talcum** (talc) is a clay mineral, composed of hydrated magnesium silicate with the chemical formula Mg₃Si₄O₁₀(OH)_{2.}

Specifically, the composition contains shellac, beeswax and propolis together with an insect/arachnid repellent.

**Magnesium stearate** is the chemical compound with the formula Mg₂. It is a soap, consisting of salt containing two equivalents of stearate and one magnesium cation. Magnesium stearate is a white, water-insoluble powder. Its applications exploit its softness, insolubility in many solvents, and low toxicity.

The composition may further comprise an alcohol, specifically ethanol or glycerol or a combination thereof, specifically up to 20% w/v

Sunscreen protection agents may further be comprised in the inner matrix or may, in an alternative embodiment, added to the composition as further ingredient.

Sunscreen protection agents are, for example, organic substances (light protection filters) that are liquid or crystalline at room temperature and are capable of absorbing ultraviolet radiation and releasing the absorbed energy in the form of longer-wave radiation, e.g. heat. UVB filters can be oil-soluble or water-soluble. Oil-soluble substances are, e.g. 3-benzylidene camphor or 3-benzylidene norcamphor and its derivatives, e.g. 3- (4-methylbenzylidene) camphor; 4-aminobenzoic acid derivatives, preferably 4- (dimethylamino) benzoic acid 2-ethylhexyl ester, 4-dimethylamino)benzoic acid 2-octyl ester and 4- (dimethylamino) benzoic acid amyl ester ; esters of cinnamic acid, specifically 4- methoxy cinnamic acid 2-ethylhexyl ester, 4-methoxy cinnamic acid propyl ester, 4-methoxy cinnamic acid isoamyl ester 2- cyano-3,3-phenyl cinnamic acid 2-ethylhexyl ester (octocrylene); esters of salicylic acid, specifically salicylic acid 2-ethylhexyl ester, salicyl acid 4-isopropyl benzyl ester, salicylic acid monomethyl ester; Derivatives of benzophenone, specifically 2-hydroxy-4-methoxybenzophenone, 2-hydroxy-4-methoxy-4-methylbenzophenone, 2,2-dihydroxy-4-methoxybenzophenone; esters of benzylmalonic acid, specifically 4-methoxybenzmalonic acid di-2-ethylhexyl ester; Triazine derivatives, such as. e.g. 2, 4, 6-trianilino-(p-carbo-2-ethyl-1-hexyloxy)-1, 3,5-triazine and octyl triazone, or dioctyl butamido triazones; propane-1, 3-diones, such as 1-(4-tert-butylphenyl)-3-(4methoxyphenyl) propane-1, 3-dione; ketotricyclo (5.2.1.0) decane derivatives.

Suitable water-soluble substances are: 2-phenylbenzimidazole-5-sulfonic acid and its alkali, alkaline earth, ammonium, alkylammonium; sulfonic acid derivatives of benzophenones, specifically 2 hydroxy-4-methoxybenzophenone-5-sulfonic acid and its salts; sulfonic acid derivatives of 3-benzylidenecamphor, such as e.g. 4-(2-oxo-3-bornylidene-methyl) benzenesulfonic acid and 2 methyl-5- (2-oxo-3-bornylidene) sulfonic acid and their salts. In particular, derivatives of benzoyl methane, such as 1- (4'-tert-butyl-phenyl)-3- (4'-methoxyphenyl) propane-1, 3-dione, 4-tert-butyl-4'-methoxydiben- zoyl-methane, 1-phenyl-3-(4-isopropylphenyl)-propane-1, 3-dione as well as enamine compounds and colloidal lignins, are suitable as typical UV-A filters.

The UV-A and UV-B filters can of course also be used in mixtures.

In addition, insoluble light protection pigments, namely finely dispersed metal oxides or salts, are also suitable for this purpose. Examples of suitable metal oxides are, in particular, zinc oxide and titanium dioxide, oxides of iron, zirconium, silicon, manganese, aluminium and cerium and mixtures thereof. Silicates (talc), barium sulfate or zinc stearate can be used as salts. The particles can have an average diameter of less than 100 nm, preferably between 5 and 50 nm and in particular between 15 and 30 nm. The pigments may also be surface-treated, i.e. hydrophilized or hydrophobized. Typical examples are coated titanium dioxides. Silicones, especially trialkoxy octyl silanes or simethicone, can be used as hydrophobic coating agents. In sunscreens, so-called micro- or nanopigments are specifically used as encapsulated active ingredients. Preferably, micronized zinc oxide can be used.

Repellent substances are comprised in the inner matrix or may, in addition, added to the composition as further ingredient.

Natural fragrances can be extracts of flowers (lily, lavender, roses, jasmine, neroli, ylang-ylang), stems and leaves (geranium, patchouli, petitgrain), fruits (anise, coriander, cumin, juniper), fruit peels (bergamot, lemon, oranges), roots (mace, angelica, celery, cardamom, costus, iris, calmus), woods (pine, sandal, guaiac, cedar, rosewood), herbs and grasses (tarragon, lemongrass, sage, thyme), needles and twigs (spruce, fir, pine, mountain pine), resins and balsams (galbanum, elemi, benzoin, myrrh, olibanum, opoponax). Animal raw materials may also be used, such as civet and castoreum. Typical synthetic fragrance compounds are products of the ester, ether, aldehyde, ketone, alcohol and hydrocarbon type. Ester-type fragrance compounds include benzyl acetate, phenoxyethyl isobutyrate, p-tert-butyl cyclohexyl acetate, linalyl acetate, dimethyl benzyl carbinyl acetate, phenyl ethyl acetate, linalyl benzoate, benzyl formate, ethyl methyl phenyl glycinate, allyl cyclohexyl propionate, styrallyl propionate, and benzyl salicylate. Ethers include, for example, benzyl ethyl ether; aldehydes include, for example, the linear alkanals with 8 to 18 carbon atoms, citral, citronellal, citronellyloxyacetaldehyde, cyclamen aldehyde, hydroxycitronellal, lilial and bourgeonal; ketones, to the alcohols anethole, citronellol, eugenol, isoeugenol, geraniol, linalool, phenylethyl alcohol and terpineol, to the hydrocarbons belong mainly the terpenes and balsams. Preferably, however, mixtures of different fragrances are used, which together create an appealing scent. Essential oils of lower volatility, which are mostly used as aroma components, are also suitable as perfume oils, e.g. sage oil, chamomile oil, clove oil, melissa oil, mint oil, cinnamon leaf oil, lime blossom oil, juniper berry oil, vetiver oil, oliban oil, galbanum oil, labolanum oil and lavandin oil. Preferably, bergamot oil, dihydromyrcenol, lilial, lyral, citroneilol, phenylethyl alcohol, a-hexyl cinnamaldehyde, geraniol, benzylacetone, cyclamen aldehyde, linalool, ambroxan, indole, hedione, sandelice (sandal butenol), citron oil, mandarin oil, orange oil, allyl amylglycolate, cyclovertal, lavandin oil, muscat sage oil, ß-damascenone, geranium oil, bourbon, cyclohexyl salicylate, Vertofix Coeur, Iso-E-Super, Fixolide, Evernyl, Iraldein^{®} gamma, phenylacetic acid, geranyl acetate, benzyl acetate, rose oxide, irotyl, and floramate, used alone or in mixtures.

As used herein, the **microparticles** are particles between 0.1 and 1000 µm in size, preferably the mean diameter is in the range of 10 to 700 µm, specifically 20 to 500 µm. more specifically 50 to 250 µm.

The composition described herein can be of any condition that allows topical application to the skin, specifically to hair or fur. Non-limiting examples therefor are a balm, a cream, a powder, a lotion, a solution, an emulsion, a gel, an ointment, a paste, a pen, a spray, a shampoo, or an aerosol. Emulsifying agents, filling materials, such as e.g. polymers, e.g. cellulose derivatives, PEGs, oil/fatty acid mixtures, vaselines, lanolin; and hydrogels may be added to the composition, such as, but not limited to Nivea^{®}, Bepanthen^{®}, or any soaps.

In a specific embodiment, the microparticles, comprise beeswax in the range of 5-20% w/v, specifically in the range of 5 to 10% w/v; shellac in the range of 1-20% w/v, specifically 5-10% w/v; propolis in the range of 1-10% w/v, specifically in the range of 1 to 5% w/v; insect repellents in the range of 1 to 10% w/v, and optionally glycerin and/or oil in the range of 10-50% w/v. The adhesion promoting agent can be present in an amount of at least 5% w/v, specifically in the range of 5 to 60% w/v, specifically in the range of 5 to 50% w/v, 5 to 40% w/v, 5 to 30% w/v, or 5 to 20% w/v.

A further aspect of the present invention is the production of the microparticles of the composition described herein.

The method comprises the steps of mixing and stirring melted beeswax, which had been carefully heated up to its melting point, i.e. the beeswax is heated up to a temperature of about 62 to 65°C. One or more insect and/or arachnid repellents, and shellac or a tree resin solubilized in alcohol, specifically ethanol, are added and a sonification step at a temperature in the range of 40 to 50 °C is performed, thereby the microparticles are formed. Optionally, an adhesion agent is added before sonication, specifically it is propolis, dissolved in ethanol, wherein the whole composition may have a gel-like character of a balsam.

The so obtained composition can be used as stock or basic preparation which can later be formulated into creams, lotions, gels or sprays by the addition of distinctive substances.

Said composition, optionally formulated with additional excipients providing the respective aggregate states, is preferably stored at room temperature and away from light. The inventive composition is stable for at least 6 months, specifically for 7, 8, 9, 10, 11, 12, 13, 14, 15, 16, 17, 18 months or longer.

A carrier material, specifically glycerin or a vegetable oil can be added to the microparticles, and optionally a second sonification step is performed at a temperature in the range of 40 to 50 °C. Such carrier materials can be glycerin, oils or commercially available skin care creams, whereby a cream is generated. If the composition is emulsified in aqueous solutions, a lotion can be generated. Mixing with powders, such as talcum (magnesium stearate hydrate) results in a coarse powder, suitable for treatment of long hair.

Some examples of how the composition according to the invention can be used are given below.

Use as a balm on horses and the legs of animals and other livestock: when the formulation is applied with a sponge/cloth/towel to the areas to be protected from the hoof upwards, a wax film with the composition is formed, which provides a robust mechanical barrier and, depending on the kind of repellents, an odour effect with a depot effect occurs, which remains stable over several days and weeks, even when exposed to water.

Use as a cream on horses and ears of other animals and livestock: In addition, a carrier substance (cream) can be added to the inventive composition to enable targeted application in sensitive areas (such as ears) where, above all, spraying is unsuitable and a thick layer of material is not desired, specifically because the auditory canal could be blocked. Non-limiting examples of creams are Nivea^{®}, Beiersdorf, Hamburg Germany and Bepanthen^{®}, Bayer, Austria GmbH.

Application on horses and neck area of other animals, specifically farm animals: the composition may be emulsified in an aqueous solution by further ultrasound treatment, thereby resulting in a lotion that can be applied over a large area by rubbing or spraying. If the spraying process is perceived as an irritating noise, the animal's head area is rather not treatable, also the eyes/mucous membranes should not be treated using a spray.

Application as a balm/powder, e.g. to dogs: The composition formulated as a lotion can be applied to short-haired animals, especially for tick repellent, or as a balm on short fur, or fur-free belly area. For long fur, a coarse powder formulation containing the inventive composition is suitable. E.g., with the addition of repellents such as cumin, neem oil, a repelling effect is achieved, further providing a depot effect through the storage properties of the composition, so that the insect and arachnid repellent properties have a long-lasting effect. By administering the substance on the skin, one can also expect a systemic effect.

Application on humans: application on humans as an insect/tick repellent is also possible, the composition allows application on the skin without the irritating/allergenic effects of essential oils optionally present in the microparticles.

The composition can be used for the treatment of human or non-human animals. Specifically, the non-human animals can be domestic pets, including canine animals such as a dog, a bitch, or a puppy, feline animals such as a torn, a queen or a kitten, livestock including equine animals such as a horse e.g. a gelding, a mare, a foal, a filly, or a stallion, bovine animals such as a bull, a cow, an heifer, a steer, or a calf, ovine animals such as a ram, an ewe, or a lamb, porcine animals such as a sow, a boar, barrow, stag, gilt or a piglet. Insect/arachnid repellents that are generally known to harm the respective animals are not included in the composition, e.g. in case the composition is used for cats, neem oil and tea tree oil are not contained, because said agents are toxic for cats.

### EXAMPLES

The examples described herein are illustrative of the present invention and are not intended to be limitations thereon. Different embodiments of the present invention have been described according to the present invention. Many modifications and variations may be made to the techniques described and illustrated herein without departing from the scope of the invention. Accordingly, it should be understood that the examples are illustrative only and are not limiting upon the scope of the invention.

### Example 1:

### Source materials of a 'proof of principle' formulation:

### Basic formulation

| Material | Percentages by weight |
|---|---|
| Unbleached, purified beeswax melted | - 5-20% |
| Unbleached 'stock varnish' - shellac/propolis in at least 80% ethanol (saturated solution) each. | - 1-10% |
| Alternative to shellac: pine tree resin in same formulation | |
| Repellent/odorous substances from below list | - 10% |
| Optional: Glycerine or oil (synthetic/natural origin) | - 10% - 40% |

### Selected repellent substances that were added:

- Thyme oil
- Marjoram oil
- Tea tree oil (except for dogs and cats as known to be toxic to liver/nephroidic system)
- Swiss stone pine oil
- Neem oil (specifically for obtaining acarizide - effect) but not for cats
- Black cumin/cumin oil
- Sage oil

The repellent substances were added to the base formulation before the ultrasonic treatment - approx. 2 ml per 100ml base formulation.

### Horse treatment: Legs

Suitability for horses has been tested extensively: on the legs, especially with types with moderate hair growth on the front legs (Araber), biting of insects was efficiently reduced over days to weeks as the balm formulation allowed slow release of the repellents and disappeared slowly. In this example, the mechanical barrier function of the inventive composition was shown to effectively avoid biting of insects. At the same time, no ticks were found in the treated areas.

### Ears:

The crème formula containing the inventive composition proved to be highly suitable to treat the outer ears to avoid insects to bite or annoy in the head region - a thick balm or the spray containing the composition would be a less preferred formulation in this context as the ears are sensitive for blocking and the spraying sound is difficult to accept in general and specifically in the head region.

### Alternative addition of known repellents:

- Autan^{®}
- "Anti-Brumm"^{®}

Added to the basic formulation before the ultrasonic treatment in a ratio of 1:10.

Ultrasound treatment was performed for approx. 15min. Sonication (at approx. 2min intervals) with W(att) power output at 70% amplitude in 50ml Falcon, (positioned in a water-filled beaker at 20°C). After treatment the sample was warmed to approx. 40°C.

The stability of the base formulation was proven to be at least 6 months at room temperature (protected from light). No microbial/fungal presence was detectable, particle integrity was fully confirmed by light microscope imaging.

Preparation of a spray formulation: the composition was diluted 1:10 in ethanol (30%) and 20% w/v deionized water was added before use and filled into a spray bottle. As an alternative, the composition can be assed to a basic emulsion (neutral lipids) as carrier material.

Preparation of an ointment formulation for ears (depending on the desired final consistency):
- agar-agar, derived from red algae - for a gel-like character of the end product
- other emulsifiers (besides propolis)
   cetyl alcohol and lysolecithin - resulted in very soft, yellowish white cream
- cocoa/shea butter - a cream in the result, but in higher concentrations (20-40% w/w), resulting in a harder consistency, like a deostick.

Preparation of a powder formulation: mixed with magnesium stearate-powder or naturally occurring magnesium silicate hydrate in the ready-prepared basic formulation (see above) as a filler - add emulsification-), a coarse powder was formed which can be distributed in the coat of long-haired dogs.

### Example 2

### Basic formulation

| Material (stock solution) | Percentages by weight |
|---|---|
| Unbleached, purified beeswax melted | - 10% |
| Unbleached 'stock varnish' - dewaxed shellac dissolved saturated in 96%ethanol | - 5% |
| Propolis (saturated in 96%Ethanol) | - 5% |
| Thymin oil | - 1% |
| Sage oil | - 1% |
| Cumin/Black Cumin oil | - 5% |
| Glycerine | - 50% |

Ultrasound treatment: The basic formulation was applied to approx. 15min. sonication (in approx. 2min intervals) at 70% amplitude in 50ml Falcon, (before and after addition of glycerine/plant oil/carrier material) not exceeding 50°C.

Preparation of a spray formulation: the composition was diluted 1:10 ethanol, 20% in deionized water before use and filled into a spray bottle, alternatively, it was added to a basic emulsion (neutral lipids) as carrier material.

Preparation of a powder formulation: (for long coats) 50%w/w basic formulation was mixed with magnesium stearate powder (or alternatively with magnesium silicate hydrate) or silicium dioxide (grain size smaller than 45µm) and work into the coat.

Preparation of an ointment formulation: Stirred into the basic formulation (see above) in carrier substance in a ratio of 1:2).

### Carrier substances were

- Nivea ^{®}
- Bepanthen ^{®}
- Soaps (for shampooing)

Polyethylene glycol or similar inert carrier materials would also be conceivable (possibly admixture of panthenol as skin protection or sun protection materials such as TiOx or any other light - filtering substances).

### Addition of repellent/odorous substances:

- Thyme oil
- Marjoram oil
- Sage oil
- Cumin/black cumin
- (NEEM oil - for strong acarizide-effect)

Added to the base formulation before the ultrasonic treatment - approx. 1-2ml per 100ml base formulation.

Alternatively: Addition of conventional, chemical repellents:
- Autan^{®}
- "Anti-Brumm"^{®}

Added to the basic formulation before the ultrasonic treatment in a ratio of 1:10.

The stability of the base formulation was tested for 12 months, stored at room temperature (protected from light) with no visible degradation, e.g. change of odorant quality or presence of microorganisms (microscopical analysis).

### Example 3:

### Proof of microparticle formation

The composition was prepared as described above and a lipid - staining fluorescent dye (BODIPY ^{™}) was added. This appears luminous green after appropriate excitation.

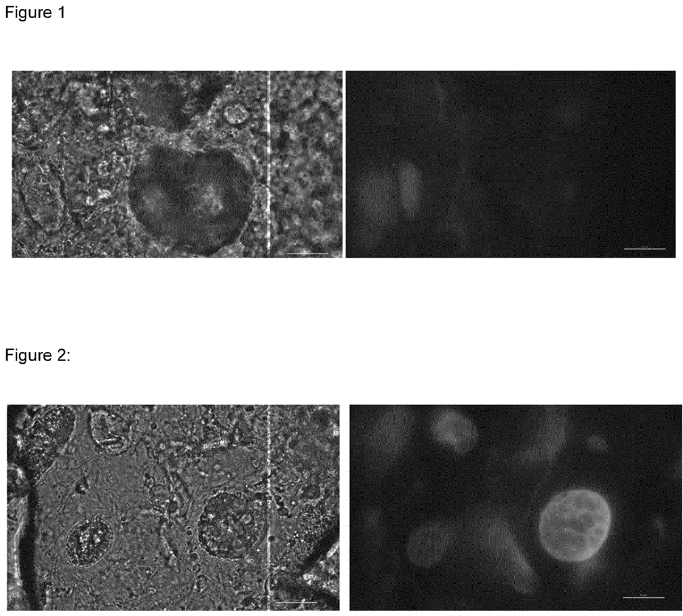

In Figure 1, a large shellac particle can be seen in this light microscope image on the left, which is not visible in the fluorescence excitation (right), but only a free accumulation of wax, marked in the transmission with an arrow. This result confirms that the shellac coating effectively encloses the wax particles (free of defects).

The above results (presence of an intact, protective shellac shell) were confirmed by the following experiment: the above microparticles were incubated in a strong, organic solvent (dimethyl sulfoxide DMSO). Subsequently, the penetration of the fluorescent dye into the wax core of the particles was observed. (Scalebar of all images corresponds to 20µm), measured in phosphate buffer). The results are shown in Figure 2.

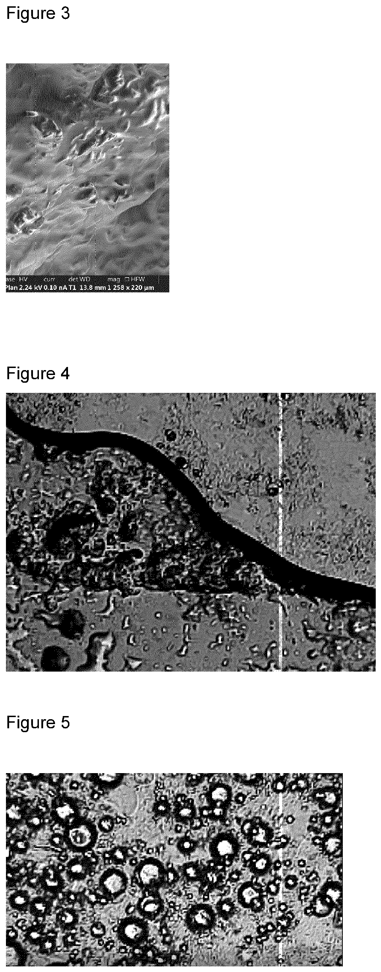

Layer formation properties are also visible in SEM (Scanning Electron Microscopy), air-dried and after gold sputtering. The results are shown in Figure 3.

### Example 4:

A microscopic slide is used as substrate and a droplet of the formulation is applied and sealed by a cover slip. A standard light microscope is employed to visualize the structure of the sample. A reference slide with scale bar has been used to identify the average sizes of the spheric particles. By a fan, the temperature is increased, which is measured by a contact-free infrared thermometer.

The results are shown in Figures 4 to 7.

Figure 4: After further heating (above approx. 40°C): Front formation of molten wax from the upper right towards the lower left, where areas of non-fused material are still visible.

Figure 5: After *in situ* heating with warm air to approx. 40°C (infrared measurement on the cover slip), visible film formation occurred directly on the (glass - slide) surface with simultaneous preservation of oil/wax/shellac particles (relevant for depot effect).

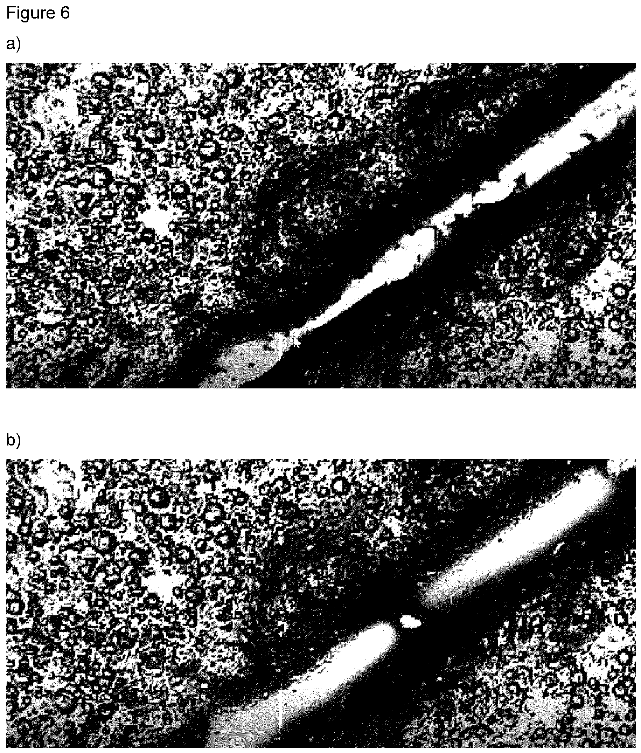

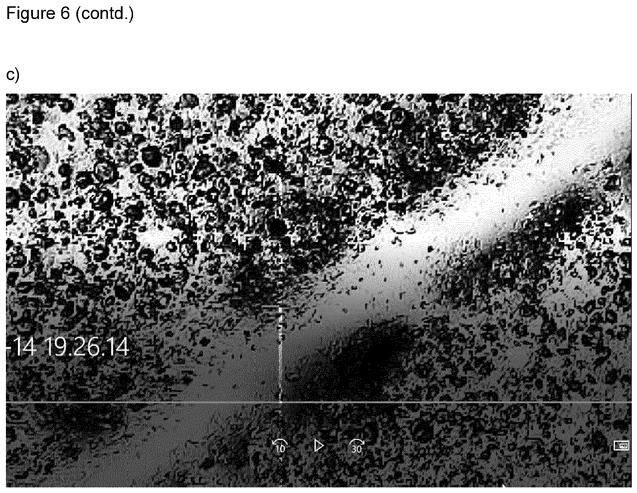

Figure 6: Image sequence: *in situ* crack healing. The layer on the slide surface was "injured" with a needle and the 'healing' was recorded by increasing the temperature from a temperature of approx. 30°C onwards. (Timelapses from top to bottom, approx. 2min).

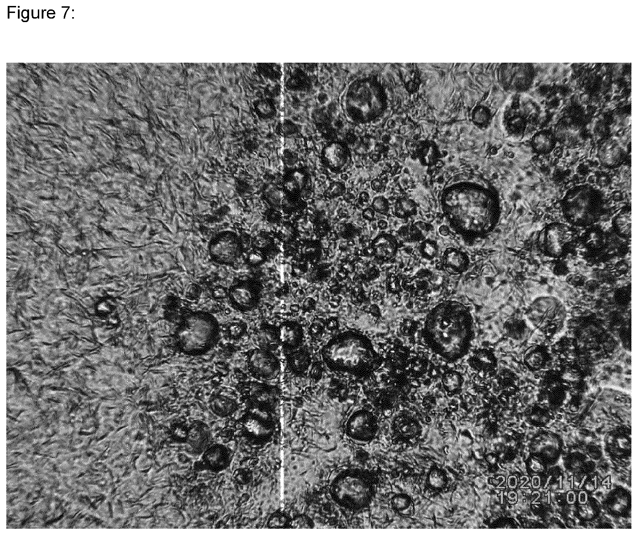

Figure 7: After application and evaporation of the ethanol, the layer formation and association of particles (wax/shellac aggregates) becomes visible in the light microscope. These associated aggregates cause the depot/self-healing effect, as they serve as a reservoir of the repellent substances and at the same time as a wax supply. Comprised essential oils or repellents are successively released from them into the ambient air.

## Claims

1. A composition comprising
i) a microparticle having
- an outer shell, comprising shellac or a tree resin, and
- an inner matrix, comprising beeswax and at least one insect and/or arachnid repellent; and
ii) an adhesion promoting agent, selected from the group consisting of propolis, cetyl alcohol, cocoa butter, lysolecithin, and hydrated magnesium silicate (talcum).

2. The composition of claim 1, wherein the adhesion promoting agent is propolis.

3. The composition of claim 1 or 2, wherein the tree resin is pine resin or Arabic gum.

4. The composition of any one of claims 1 to 3, wherein the repellent is a natural or synthetic repellent, specifically it is a lipophilic repellent, specifically the synthetic repellent is selected from the group consisting of hydroxyethyl isobutyl piperidine carboxylate, permethrin, ethyl butylacetylaminopropionate, diethyltoluamide (DEET), p-cymol, alpha-isomethyl ionone, and benzyl benzoate, specifically the natural repellent is selected from the group consisting of pyrethrum, pyrethrum derivatives selected from the group consisting of prallethrin, allethrin, and chrysanthemum extract, borneol, oil of lemon eucalyptus, thyme oil, tea tree oil, neem oil, Swiss stone pine oil, cumin oil, marjoram oil, sage oil, linalool, geraniol, cinnamyl alcohol, hydroxycitronellal, citronellol, coumarin, limonene, and eugenol, or any combinations thereof.

5. The composition of any one of claims 1 to 4, wherein the outer shell comprises shellac, and propolis.

6. The composition of any one of claims 1 to 5, further comprising an alcohol, specifically ethanol, and/or glycerol.

7. The composition of any one of claims 1 to 6, wherein the inner matrix further comprises an odorous substance, and/or sunscreen agents, specifically selected from titanium dioxide and zinc oxide.

8. The composition of any one of claims 1 to 7, wherein the microparticle has a mean diameter in the range of 20 to 500 µm.

9. A topical composition comprising the composition of any one of claims 1 to 8, which is a balm, a cream, a powder, a lotion, a solution, an emulsion, a gel, an ointment, a paste, a pen, a spray, or an aerosol.

10. The topical composition of claim 9, containing microparticles, comprising beeswax in the range of 5 to 20%, shellac in the range of 1 to 20%, propolis in the range of 1 to 10% and insect repellents in the range of 1 to 10%, at least 5% adhesion promoting agent, and optionally glycerin and/or oil in the range of 10 to 40%.

11. Method for producing a microparticle having an outer shell, comprising shellac or a tree resin, and an inner matrix, comprising beeswax and at least one insect and/or arachnid repellent; comprising the sequential steps of
i. mixing and stirring
a) melted beeswax,
b) one or more insect and/or arachnid repellents,
c) shellac or a tree resin solubilized in alcohol,
and
ii. performing a sonification step at a temperature in the range of 40 to 50 °C, thereby building the microparticles.

12. The method of claim 11, wherein an adhesion promoting agent is added in i.

13. The method of claim 11 or 12, wherein a carrier material, specifically glycerin or a vegetable oil is added to the microparticles, and optionally a second sonification step is performed at a temperature in the range of 40 to 50 °C.

14. The composition of any one of claims 1 to 8, or the topical composition of claim 9 or 10 for use in the treatment of a human or non-human animal, wherein the non-human animal is selected from domestic pets, including canine animals and feline animals, livestock including equine animals such as a horse, bovine animals, ovine animals, such as a porcine, or sheep; goats, apes.

15. The composition of any one of claims 1 to 8, or the topical composition of claim 9 or 10 for use in protecting an animal from insects or arachnid bite injuries or puncture wounds, comprising the step of topical administration of the composition or topical administration of the composition to said animal.

## Patentansprüche

1. Zusammensetzung, umfassend
i) ein Mikropartikel mit
- einer äußeren Hülle, die Schellack oder ein Baumharz umfasst, und
- einer inneren Matrix, die Bienenwachs und zumindest ein Insekten- und/oder Arachniden-Repellent umfasst; und
ii) ein haftvermittelndes Mittel, ausgewählt aus der Gruppe bestehend aus Propolis, Cetylalkohol, Kakaobutter, Lysolecithin, und hydratisiertem Magnesiumsilikat (Talk).

2. Die Zusammensetzung nach Anspruch 1, wobei das haftvermittelnde Mittel Propolis ist.

3. Die Zusammensetzung nach Anspruch 1 oder 2, wobei das Baumharz Kiefernharz oder Gummi arabicum ist.

4. Die Zusammensetzung nach einem der Ansprüche 1 bis 3, wobei das Repellent ein natürliches oder synthetisches Repellent, insbesondere ein lipophiles Repellent ist, wobei das synthetische Repellent aus der Gruppe ausgewählt ist, die aus Hydroxyethylisobutylpiperidincarboxylat, Permethrin, Ethylbutylacetylaminopropionat, Diethyltoluamid (DEET), p-Cymol, Alpha-Isomethylionon und Benzylbenzoat ausgewählt ist, wobei das natürliche Repellent im Speziellen aus der Gruppe ausgewählt ist, die aus Pyrethrum, Pyrethrumderivaten, ausgewählt aus der Gruppe, die aus Prallethrin, Allethrin und Chrysanthemenextrakt besteht, Borneol, Zitronen-Eukalyptus-Öl, Thymianöl, Teebaumöl, Neemöl, Zirbenöl, Kreuzkümmelöl, Majoranöl, Salbeiöl, Linalool, Geraniol, Cinnamylalkohol, Hydroxycitronellal, Citronellol, Cumarin, Limonen und Eugenol, oder beliebigen Kombinationen davon besteht.

5. Die Zusammensetzung nach einem der Ansprüche 1 bis 4, wobei die äußere Hülle Schellack, und Propolis umfasst.

6. Die Zusammensetzung nach einem der Anspruch 1 bis 5, ferner umfassend einen Alkohol, im Speziellen Ethanol, und/oder Glycerin.

7. Die Zusammensetzung nach einem der Ansprüche 1 bis 6, wobei die innere Matrix ferner eine Duftsubstanz und/oder Sonnenschutzmittel umfasst, die im Speziellen aus Titandioxid und Zinkoxid ausgewählt sind.

8. Die Zusammensetzung nach einem der Ansprüche 1 bis 7, wobei das Mikropartikel einen mittleren Durchmesser in dem Bereich von 20 bis 500 µm aufweist.

9. Topische Zusammensetzung, umfassend die Zusammensetzung nach einem der Ansprüche 1 bis 8, die ein Balsam, eine Creme, ein Puder, eine Lotion, eine Lösung, eine Emulsion, ein Gel, eine Salbe, eine Paste, ein Pen, ein Spray oder ein Aerosol ist.

10. Die topische Zusammensetzung nach Anspruch 9, die Mikropartikel enthält, die Bienenwachs in dem Bereich von 5 bis 20 %, Schellack in dem Bereich von 1 bis 20 %, Propolis in dem Bereich von 1 bis 10 % und Insekten-Repellents in dem Bereich von 1 bis 10 %, zumindest 5 % des haftvermittelnden Mittels, und optional Glycerin und/oder Öl in dem Bereich von 10 bis 40 % umfassen.

11. Verfahren zur Herstellung eines Mikropartikels mit einer äußeren Hülle, die Schellack oder ein Baumharz umfasst, und einer inneren Matrix, die Bienenwachs und zumindest ein Insekten- und/oder Arachniden-Repellent umfasst, wobei das Verfahren der Reihe nach die Schritte umfasst
i. Mischen und Rühren von
a) geschmolzenem Bienenwachs,
b) einem oder mehreren Insekten- und/oder Arachniden-Repellents,
c) Schellack oder einem Baumharz, das in Alkohol solubilisiert ist, und
ii. Durchführen eines Ultraschallbehandlungs-Schritts bei einer Temperatur in dem Bereich von 40 bis 50 °C, wodurch die Mikropartikel aufgebaut werden.

12. Das Verfahren nach Anspruch 11, wobei ein haftvermittelndes Mittel in i. hinzugefügt wird.

13. Das Verfahren nach Anspruch 11 oder 12, wobei ein Trägermaterial, im Speziellen Glycerin oder ein Pflanzenöl, zu den Mikropartikeln zugegeben wird, und optional ein zweiter Ultraschallbehandlungs-Schritt bei einer Temperatur in dem Bereich von 40 bis 50 °C durchgeführt wird.

14. Die Zusammensetzung nach einem der Ansprüche 1 bis 8, oder topische Zusammensetzung nach Anspruch 9 oder 10, zur Verwendung bei der Behandlung eines Menschen oder eines nicht-menschlichen Tiers, wobei das nicht-menschliche Tier aus Haustieren, was katzen- und hundeartige Tiere beinhaltet, Nutztieren, was pferdeartige Tiere wie etwa ein Pferd, rinderartige Tiere, schafartige Tiere, wie etwa ein schweineartiges Tier, oder Schafe beinhaltet, Ziegen und Affen ausgewählt ist.

15. Die Zusammensetzung nach einem der Ansprüche 1 bis 8, oder topische Zusammensetzung nach Anspruch 9 oder 10, zur Verwendung im Schutz eines Tiers vor Bissverletzungen oder Stichwunden durch Insekten oder Arachniden, umfassend den Schritt der topischen Verabreichung der Zusammensetzung oder die topische Verabreichung der Zusammensetzung an das Tier.

## Revendications

1. Composition comprenant
i) une microparticule ayant
- une enveloppe externe, comprenant de la gomme laque ou une résine d'arbre, et
- une matrice interne, comprenant de la cire d'abeille et au moins un répulsif d'insectes et/ou d'arachnides ; et
ii) un agent favorisant l'adhérence, choisi dans le groupe constitué par la propolis, l'alcool cétylique, le beurre de cacao, la lysolécithine et le silicate de magnésium hydraté (talc).

2. Composition selon la revendication 1, dans laquelle l'agent favorisant l'adhérence est la propolis.

3. Composition selon la revendication 1 ou 2, dans laquelle la résine d'arbre est de la résine de pin ou de la gomme arabique.

4. Composition selon l'une quelconque des revendications 1 à 3, dans laquelle le répulsif est un répulsif naturel ou synthétique, en particulier il est un répulsif lipophile, en particulier le répulsif synthétique est choisi dans le groupe constitué par l'hydroxyéthyl isobutyl pipéridine carboxylate, la perméthrine, le butylacétylaminopropionate d'éthyle, le diéthyltoluamide (DEET), le p-cymol, l'alpha-isométhyl ionone, et le benzoate de bentyle, en particulier le répulsif naturel est choisi dans le groupe constitué par le pyréthre, les dérivés de pyréthre choisis dans le groupe constitué par la pralléthrine, l'alléthrine et l'extrait de chrysanthème, le bornéol, l'huile d'eucalyptus citronné, l'huile de thym, l'huile d'arbre à thé, l'huile de neem, l'huile de pin parasol suisse, l'huile de cumin, l'huile de marjolaine, l'huile de sauge, le linalol, le géraniol, l'alcool cinnamylique, l'hydroxycitronellal, le citronellol, la coumarine, le limonène et l'eugénol, ou toutes les combinaison de ceux-ci.

5. Composition selon l'une quelconque des revendications 1 à 4, dans laquelle l'enveloppe externe comprend de la gomme laque et de la propolis.

6. Composition selon l'une quelconque des revendications 1 à 5, comprenant en outre un alcool, en particulier de l'éthanol et/ou du glycérol.

7. Composition selon l'une quelconque des revendications 1 à 6, dans laquelle la matrice interne comprend en outre une substance odorante, et/ou des agents écrans solaires, en particulier choisis parmi le dioxyde de titane et l'oxyde de zinc.

8. Composition selon l'une quelconque des revendications 1 à 7, dans laquelle la microparticule a un diamètre moyen compris dans la plage de 20 à 500 µm.

9. Composition topique comprenant la composition selon l'une quelconque des revendications 1 à 8, qui est un baume, une crème, une poudre, une lotion, une solution, une émulsion, un gel, un onguent, une pâte, un stylo, un spray ou un aérosol.

10. Composition topique selon la revendication 9, contenant des microparticules, comprenant de la cire d'abeille dans la plage de 5 à 20 %, de la propolis dans la plage de 1 à 10 % et des répulsifs d'insectes dans la plage de 1 à 10 %, au moins 5 % d'un agent favorisant l'adhérence, et éventuellement de la glycérine et/ou de l'huile dans la plage de 10 à 40 %.

11. Procédé de production d'une microparticule ayant une enveloppe externe, comprenant de la gomme laque ou une résine d'arbre, et une matrice interne, comprenant de la cire d'abeille et au moins un répulsif d'insectes et/ou d'arachnides ; comprenant les étapes séquentielles de
i. mélange et agitation
a) d'une cire d'abeille fondue,
b) d'un ou de plusieurs répulsifs d'insectes et/ou d'arachnides,
c) de la gomme laque ou d'une résine d'arbre solubilisée dans de l'alcool,
et
ii. réalisation d'une étape de sonification à une température comprise dans la plage de 40 à 50°C, ce qui permet de construire des microparticules

12. Procédé selon la revendication 11, dans lequel l'agent favorisant l'adhérence est ajouté en i.

13. Procédé selon la revendication 11 ou 12, dans lequel un matériau vecteur, en particulier de la glycérine ou une huile végétale est ajoutée aux microparticules, et éventuellement une seconde étape de sonification est réalisée à une température comprise dans la plage de 40 à 50°C.

14. Composition selon l'une quelconque des revendications 1 à 8, ou composition topique selon la revendication 9 ou 10 destinée à être utilisée dans le traitement d'un humain ou d'un animal non humain, dans laquelle l'animal non humain est choisi parmi les animaux domestiques de compagnie, y compris les animaux canins et les animaux félins, les animaux d'élevage y compris les animaux équins tels qu'un cheval, les animaux bovins, les animaux ovins tel qu'un porc, ou un mouton ; les chèvres, les singes.

15. Composition selon l'une quelconque des revendications 1 à 8, ou composition topique selon la revendication 9 ou 10 destinée à être utilisée dans la protection des animaux contre les blessures par piqûres d'insectes ou d'arachnides ou les plaies par piqûres, comprenant l'étape d'administration topique de la composition ou l'administration topique de la composition audit animal.
